# EUROPÄISCHE PATENTSCHRIFT

(11) **EP 4 081 385 B1**
(45) Veröffentlichungstag und Bekanntmachung des Hinweises auf die Patenterteilung: **20.09.2023**
(21) Anmeldenummer: 21702975.0
(22) Anmeldetag: 01.02.2021
(51) Int. Cl.: B29C 48/35, B29C 48/09, B29C 48/92

(54) **EINRICHTUNG ZUM ANFAHREN EINES EXTRUSSIONSPROZESSE**
DEVICE FOR STARTING AN EXTRUSION PROCESS
DISPOSITIF POUR DÉMARRER UN PROCÉDÉ D'EXTRUSION

(30) Priorität: 12.02.2020 DE 102020103687
(43) Veröffentlichungstag der Anmeldung: 02.11.2022
(73) Patentinhaber: battenfeld-cincinnati Germany GmbH, 32547 Bad Oeynhausen NRW (DE)
(72) Erfinder: HUS, Tobias, 32312 Lübbecke Deutschland (DE); DEPPE, Carsten, 47906 Kempen (DE)
(86) Internationale Anmeldenummer: PCT/EP2021/052242
(87) Internationale Veröffentlichungsnummer: WO 2021/160449

(56) Entgegenhaltungen:
- DE-B- 1 094 977
- DE-U1- 20 221 671
- US-B1- 6 368 547

## Beschreibung

Die Erfindung betrifft eine Einrichtung zum Anfahren eines Extrusionsprozesses umfassend mindestens eine Abzugsvorrichtung mit einem Grundrahmen, eine auf dem Grundrahmen angeordnete Plattform, eine auf der Plattform angeordneten Seilwinde mit einer Trommel, einem Drahtseil, das auf der Trommel der Seilwinde aufwickelbar ist und über Umlenkrollen in einer Extrusionslinie ein extrudiertes Kunststoffrohr bis zur Übernahme durch einen Abzug zieht.

Heute wird bei größeren Abzügen, wie sie bei der Extrusion von Großrohren eingesetzt werden, für das Anfahren des Extrusionsprozesses in der Regel eine Seilwinde als Anfahrhilfe eingesetzt. Diese wird oft oben auf dem Grundrahmen des Abzugs befestigt, um Platz in der Produktionshalle des Kunden zu sparen. Das Drahtseil gelangt dann über Umlenkrollen in die Extrusionslinie und zieht das Rohr durch die einzelnen Anlagenkomponenten, bis dieses den Abzug erreicht.

Die Winde muss daher folgende Kriterien erfüllen:
- Es wird eine entsprechende Zugkraft von mehreren Tonnen benötigt.
- Die Winde soll das Rohr mit konstanter Geschwindigkeit durch die Anlage ziehen, damit das gerade angefahrene Rohr bereits ein verkaufsfähiges Produkt wird.
- Die Winde wird für gewöhnlich einlagig ausgeführt. Bei mehrlagigen Winden würde es bei jedem Wechsel von einer Lage zur nächsten zu einer Änderung der Geschwindigkeit kommen, da sich der Durchmesser der Wicklung und damit die Umfangsgeschwindigkeit ändert. Diese Änderung tritt plötzlich auf, ist schwer zu erfassen und noch schwerer zu kompensieren.
- Beim Aufwickeln des Drahtseils auf die Trommel sollte der Winkel zwischen Seil und Extrusionsachse nicht zu groß sein, erfahrungsgemäß sollte ein Wert von 3° bis 4° nicht überschritten werden. Andernfalls kann das Seil aus der Führung auf der Trommel geraten, wodurch es wiederum zu ungewollten Veränderungen der Geschwindigkeit kommen kann. Außerdem entstehen bei größeren Winkeln nicht zu vernachlässigende Seitenkräfte auf die Umlenkrollen.

Um das Rohr durch alle vorhandenen Anlagenkomponenten zu ziehen wird eine bestimmte Drahtseillänge benötigt. Beim Einsatz eines längeren Seiles in Verbindung mit einer breiteren Trommel und gleichem Trommeldurchmesser würde der oben genannte Winkel zu groß ausfallen. Es ist also hierbei entscheidend, dass der Winkelbereich nicht eingehalten werden könnte, wenn die Trommel bei gleichem Durchmesser verbreitert wird. Unter Berücksichtigung der genannten Kriterien ist die einzige Möglichkeit ein längeres Seil einsetzen zu können, den Durchmesser der Trommel zu vergrößern. Dies bringt folgende Nachteile mit sich:
- Hohes Eigengewicht der Trommel und die damit verbundene Verstärkung des Grundrahmens
- Der Einsatz eines größeren und stärkeren Antriebs ist erforderlich, da das Seil mit einem größeren Abstand zum Drehpunkt aufgewickelt wird (längerer Hebelarm und damit ein höheres Moment).
- Erhöhter Fertigungsaufwand für die größere Trommel.
- Deutlich erhöhte Herstellkosten für die gesamte Winde.

Aus der DE 20 221 671 U1 ist eine Einrichtung zum Anfahren eines Extrusionsprozesses unter Verwendung einer Seilwinde bekannt. Jedoch wird in der Schrift nicht näher auf deren Funktionsprinzip und Ausgestaltung eingegangen.

**Aufgabe** der Erfindung ist es, die vorhandenen Winden und deren Einsatz derart weiterzuentwickeln, dass weiterhin eine kompakte und preiswerte Winde eingesetzt werden kann ohne für größere Seillängen den Durchmesser der Winde vergrößern zu müssen.

Die **Lösung** der Aufgabe ist in Verbindung mit dem Oberbegriff des Anspruches 1 dadurch gekennzeichnet, dass die Plattform quer zur Extrusionsrichtung verfahrbar ist.

Auf diese Weise kann die Seilwinde immer so platziert werden, dass der maximal zulässige Winkel nicht überschritten wird. Die Seilwinde kann so auch bei kleinem Trommeldurchmesser weiterhin einlagig wickeln. Da der Abstand zwischen Seil und Drehpunkt der Trommel kleiner ist, muss der Antrieb ein geringeres Drehmoment aufbringen und kann kompakter ausgeführt werden. Bei fehlender Synchronisierung der Drehzahl der Seilwinde und der Geschwindigkeit der Querverstellung ist es trotzdem möglich den Winkel im angegebenen Bereich einzustellen. Es muss kein exakter Winkelwert eingestellt und gehalten werden.

Weiterbildungsgemäß ist vorgesehen, dass die Plattform auf Linearführungen angeordnet ist und über motorisch angetriebene Spindeln bewegt wird.

Vorteilhafterweise wird der Winkel zwischen dem Drahtseil und der Extrusionsachse überwacht. Dies kann mittels einer Kamera oder auch mittels Sensoren geschehen, Wird eine Abweichung von den Vorgaben detektiert, wird über die Maschinensteuerung dem entgegengewirkt. Das kann z.B. durch Erhöhung der Geschwindigkeit der querverfahrenden Winde geschehen. Als Abweichung wird ein Winkel ab 2° bis 8° von der Extrusionsachse angesehen, unabhängig in welche Richtung. Idealerweise wird der Winkel zwischen 3° bis 4° von der Extrusionsachse gehalten. Aber auch andere Winkelbereiche zwischen 2° und 8°, wie, 5° oder 6° sind denkbar.

Vorteilhafte Weiterbildungen sind in den weiteren Unteransprüchen wiedergegeben.

In den Zeichnungen wird schematisch eine erfindungsgemäße Vorrichtung gezeigt:
- Fig. 1: zeigt eine typische Extrusionslinie
- Fig. 2: ein Seitenansicht der Abzugsvorrichtung
- Fig. 3: eine Draufsicht der Abzugsvorrichtung
- Fig. 4: eine 3D-Darstellung des Abzuges

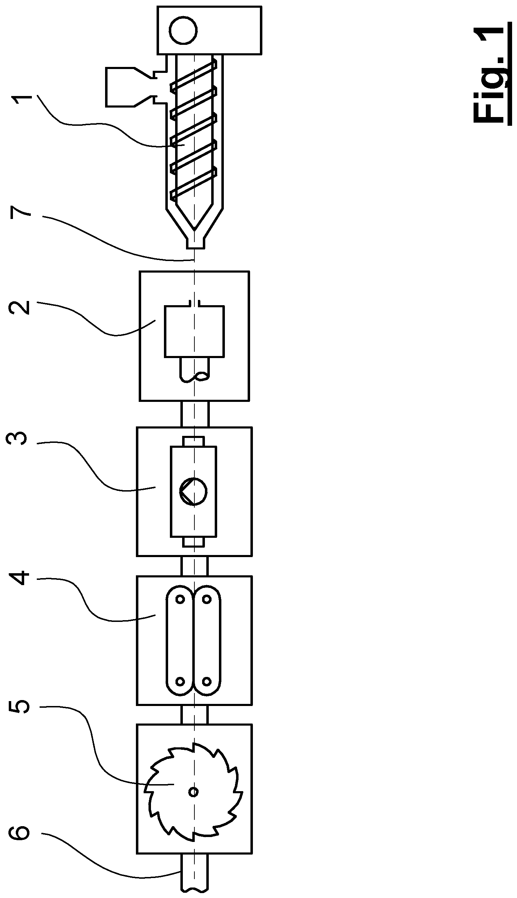

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet. Die Extrusionsachse ist mit der Positionsziffer 7 gekennzeichnet.

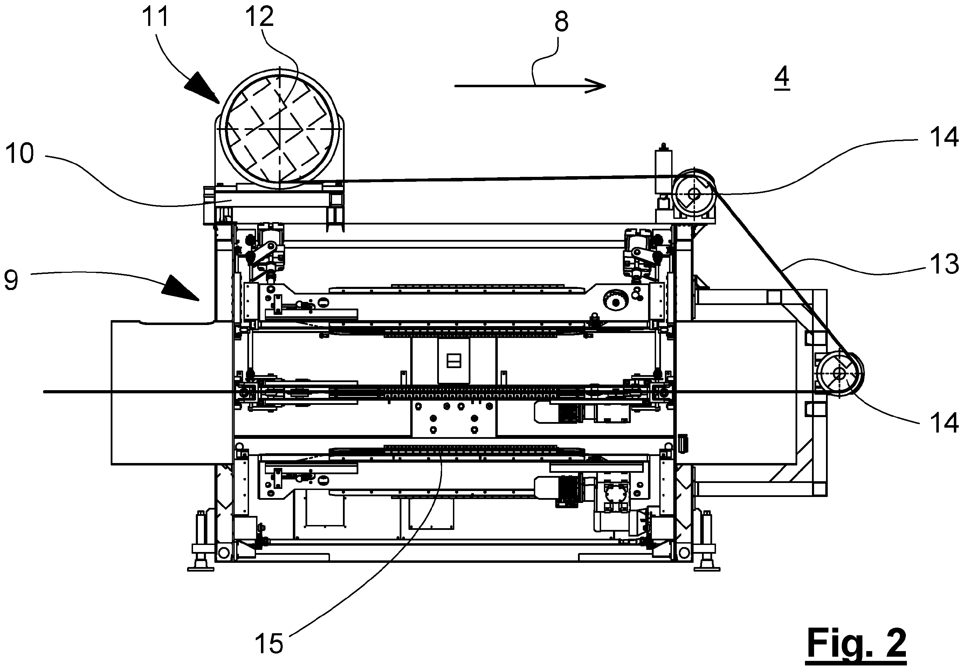

Figur 2 zeigt die Abzugsvorrichtung 4 in einer Seitenansicht. Die Extrusionsrichtung ist mit Positionsziffer 8 angegeben. Die Abzugsvorrichtung 4 umfasst u.a. einen Grundrahmen 9 auf dem eine Plattform 10 angeordnet ist. Auf der Plattform 10 ist eine Seilwinde 11 mit einer Trommel 12 montiert auf die ein Drahtseil 13 aufgewickelt wird. Das Drahtseil 13 wird über Umlenkrollen 14 geführt und kann so ein nicht dargestelltes Kunststoffrohr durch die Extrusionslinie bis zur Übernahme durch den Abzug 15 ziehen.

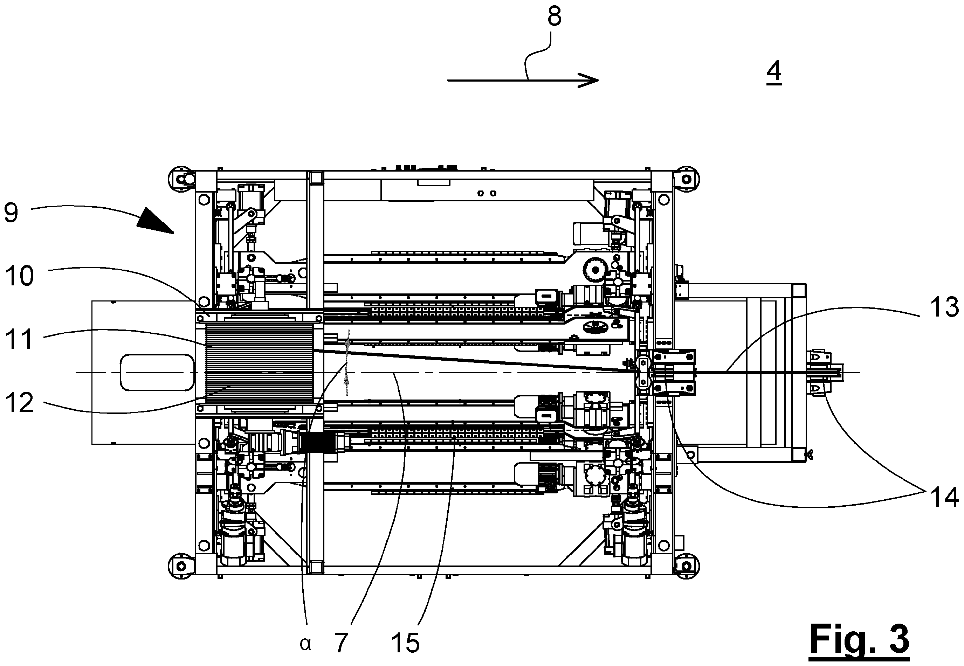

Figur 3 zeigt die gleiche Abzugsvorrichtung 4 in einer Draufsicht. Auch hier ist wieder die Extrusionsrichtung mit 8 gekennzeichnet. Das über die Trommel 12 mittels der Seilwinde 11 aufgewickelte Drahtseil 13 wird über Umlenkrollen 14 geleitet. Die Seilwinde 11 ist auf einer Plattform 10 angeordnet, die quer zur Extrusionsachse 7 verfahrbar ist. Der sich zwischen dem Drahtseil 13 und der Extrusionsachse 7 bildende Winkel α überschreitet so nicht ein vorgegebenes Maximum und die Gefahr eines Überlappens des Drahtseiles 13 oder das Abspringen desselben von der Trommel 12 kann so verhindert werden. Im Idealfall bleibt der Winkel α bei 0°, das Drahtseil 13 liegt also immer auf einer senkrechten Ebenen mit der Extrusionsachse 7. Weicht der Winkel α des Drahtseiles 13 von dieser Ebenen um mehr als 3° bis 4° ab, wird dem durch das querverfahren der Plattform 10 entgegengewirkt. Je nach eingesetzter Größe der Trommel 12 kann der Winkelbereich auch größer ausfallen, bevor eine Querverfahrung nötig wird. Überwacht wird ein Bereich von 2° bis 8° der aber auch zwischen 3° bis 5° oder dazwischen liegen kann.

Die Plattform 10 ist auf Linearführungen angeordnet und über eine motorisch angetriebene Spindel quer verfahrbar.

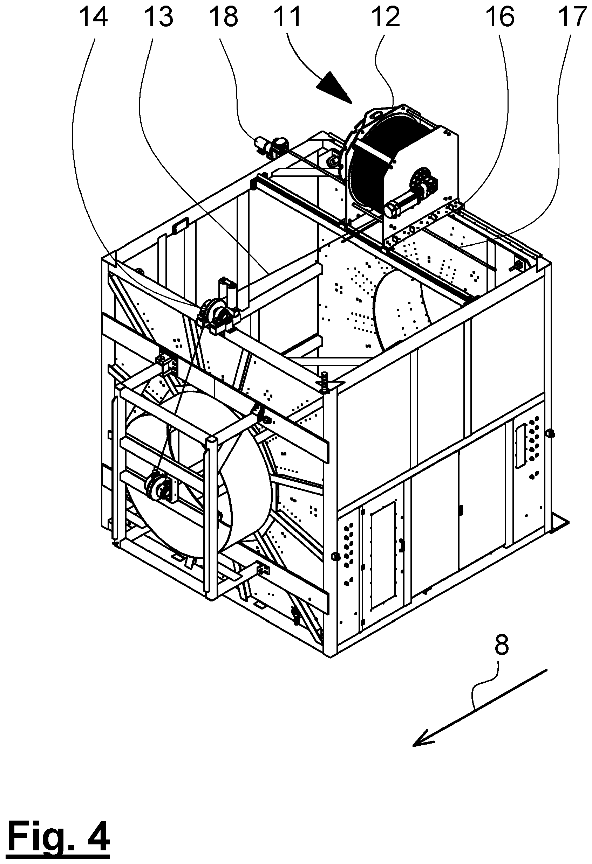

Figur 4 zeigt die Abzugsvorrichtung in einer 3D Ansicht. Die Extrusionsrichtung ist wieder mit 8 gekennzeichnet. Das Drahtseil 13 gelangt über die Umlenkrollen 14 zum Kunststoffrohr. Die Seilwinde 11 mit der Trommel 12 kann mittels der Plattform quer verfahren werden. Dafür dient die Führung 16 in Verbindung mit der Spindel 17 die über den Antrieb 18 motorisch betätigt wird.

### Bezugszeichenliste:

- 1: Extruder
- 2: Extrusionswerkzeug
- 3: Kalibrier- und Kühltank
- 4: Abzugsvorrichtung
- 5: Trennvorrichtung
- 6: Profil
- 7: Extrusionsachse
- 8: Extrusionsrichtung
- 9: Grundrahmen
- 10: Plattform
- 11: Seilwinde
- 12: Trommel
- 13: Drahtseil
- 14: Umlenkrolle
- 15: Abzug
- 16: Linearführung
- 17: motorisch angetriebene Spindel
- 18: Antrieb von 17
- α: Winkel zwischen 13 und 7

## Patentansprüche

1. Einrichtung zum Anfahren eines Extrusionsprozesses umfassend mindestens:
eine Abzugsvorrichtung (4) mit einem Grundrahmen (9),
eine auf dem Grundrahmen (9) angeordnete Plattform (10),
eine auf der Plattform (10) angeordneten Seilwinde (11) mit einer Trommel (12),
einem Drahtseil (13), das auf der Trommel (12) der Seilwinde (11) aufwickelbar ist und über Umlenkrollen (14) in einer Extrusionslinie ein extrudiertes Kunststoffrohr bis zur Übernahme durch einen Abzug (15) zieht,
**dadurch gekennzeichnet, dass**
die Plattform (10) quer zur Extrusionsrichtung (8) verfahrbar ist.

2. Einrichtung nach Anspruch 1, **dadurch gekennzeichnet, dass** die Plattform (10) auf Linearführungen (16) angeordnet ist und über eine motorisch angetriebene Spindel (17) bewegt wird.

3. Einrichtung nach Anspruch 1 oder 2, **dadurch gekennzeichnet, dass** ein Winkel α zwischen dem Drahtseil 13 und der Extrusionsachse 7 überwachbar ist.

4. Einrichtung nach Anspruch 3, **dadurch gekennzeichnet, dass** zur Überwachung des Winkes α eine Kamera eingesetzt wird.

5. Einrichtung nach Anspruch 3, **dadurch gekennzeichnet, dass** zur Überwachung des Winkes α Sensoren eingesetzt werden, die die Winkelabweichung erkennen.

## Claims

1. Device for initiating an extrusion process, comprising at least
an extraction device (4) with a base frame (9),
a platform (10) arranged on the base frame (9),
a winch (11) with a reel (12) arranged on the platform (10),
a wire rope (13), which can be wound onto the reel (12) of the winch (11) and which pulls an extruded plastic tube within an extrusion line over deflection rollers (14) until the extraction device (15) takes over,
**characterized in that**
the platform (10) is movable transversely to the direction of extrusion.

2. Device according to claim 1, **characterized in that** the platform (10) is arranged on linear guides (16) and is moved by means of a motor-driven spindle.

3. Device according to either one of the claims 1 or 2, **characterized in that** an angle α existing between the wire rope (13) and the extrusion axis (7) can be controlled.

4. Device according to claim 3, **characterized in that** a camera is used to control the angle α.

5. Device according to claim 3, **characterized in that** sensors are used to control the angle α, which recognize any angular deviation.

## Revendications

1. Dispositif de démarrage d'un processus d'extrusion, comprenant au moins :
un dispositif d'écoulement (4) avec un cadre de base (9),
une plate-forme (10) montée sur le cadre de base (9),
un treuil (11) avec un tambour (12) monté sur la plate-forme (10),
un câble (13) qui est enroulé sur le tambour (12) du treuil (11) et qui tire un tube en plastique via des rouleaux de renvoi (14) jusqu'à la prise en charge par un dispositif extracteur dans une ligne d'extrusion,
**caractérisé en ce que**
la plate-forme (10) est déplaçable transversalement à la direction d'extrusion (8).

2. Dispositif selon la revendication 1, **caractérisé en ce que** la plate-forme (10) est montée sur des guides linéaires (16) et qu'elle est déplacée par l'intermédiaire d'une broche entraînée par un moteur (17).

3. Dispositif selon l'une quelconque des revendications 1 ou 2, **caractérisé en ce qu'**un angle α existant entre le câble (13) et l'axe d'extrusion (7) peut être contrôlé.

4. Dispositif selon la revendication 3, **caractérisé en ce que** l'angle α est contrôlé par l'intermédiaire d'une caméra.

5. Dispositif selon la revendication 3, **caractérisé en ce que** l'angle α est contrôlé par l'intermédiaire de capteurs qui détectent la déviation angulaire.
